# EUROPÄISCHE PATENTSCHRIFT

(11) **EP 0 668 195 B1**
(45) Veröffentlichungstag und Bekanntmachung des Hinweises auf die Patenterteilung: **04.06.1997**
(21) Anmeldenummer: 95100365.6
(22) Anmeldetag: 12.01.1995
(51) Int. Cl.: B60R 21/20, B60R 13/00, F16B 5/04, G09F 7/18

(54) **Abdeckung für ein Gassack-Rückhaltesystem in Fahrzeugen**
Cover for an airbag restraint system in a vehicle
Couvercle pour un dispositif de retenue par sac gonflable dans un véhicule

(30) Priorität: 22.02.1994 DE 9402922 U
(43) Veröffentlichungstag der Anmeldung: 23.08.1995
(73) Patentinhaber: TRW Occupant Restraint Systems GmbH, 73553 Alfdorf (DE)
(72) Erfinder: Fischer, Anton, D-73572 Heuchlingen (DE)
(74) Vertreter: Degwert, Hartmut, Dipl.-Phys.

(56) Entgegenhaltungen:
- DE-U- 8 715 639
- FR-A- 408 598
- FR-A- 2 531 156
- GB-A- 1 132 471
- GB-A- 2 252 274
- US-A- 1 610 664
- US-A- 5 013 174
- Patent Abstracts of Japan vol.17, no.527 (M-1484) 22.September1993 & JP-A-05 139 231 (TOYODA GOSEI) 8. Juni 1993

## Beschreibung

Die Erfindung betrifft eine Abdeckung für ein Gassack-Rückhaltesystem in Fahrzeugen, mit einer Deckelplatte, an der eine mit einem Emblem versehene Plakette befestigt ist. Eine solche Abdeckung ist aus der gattungsgemäßen Schrift GB-A-2.252 274 vorbekannt.

Üblicherweise wird eine Plakette an der Deckelplatte einer solchen Abdeckung mittels angestanzter Blechfahnen oder Laschen befestigt, die auf der Rückseite der Deckelplatte umgebogen werden. Bei einer solchen Befestigung ist eine bündige Anlage der umgebogenen Fahnen oder Laschen nicht immer gewährleistet. Bei der Entfaltung des Gassacks kann dieser mit hochstehenden Kanten der umgebogenen Fahnen oder Laschen in Berührung kommen und sich daran verhaken, wobei es zu einer Beschädigung des Gassacks kommen kann.

Diese Gefahr ist in der Schrift JP-A-5 139 231 erkannt worden und es wurde vorgeschlagen, zumindest ein Teil der Plakette aus weichem Kunstharz vorzusehen.

Durch die Erfindung wird dieser Sicherheitsmangel behoben. Erfindungsgemäß weist die Plakette auf ihrer der Deckelplatte zugewandten Seite wenigstens einen angeformten Hohlniet auf, der die Deckelplatte durchdringt und dessen freier Endabschnitt auf der Rückseite der Deckelplatte umgebördelt ist. Vorzugsweise ist der umgebördelte Endabschnitt des Hohlniets konvex gewölbt und gegen die Rückseite der Deckelplatte gerichtet. Durch das Umbördeln erhält der freie Endabschnitt des Hohlniets eine hohe Formsteifigkeit. Der Rand am Ende des umgebördelten Endabschnitts des Hohlniets ist in Richtung der Rückseite der Deckelplatte zurückversetzt und kann mit dem sich entfaltenden Gassack nicht in Berührung kommen. Eine Beschädigung des Gassacks durch den umgebördelten Endabschnitt des Hohlniets ist ausgeschlossen. Die Befestigung zeichnet sich auch durch hohe Haltekräfte aus.

Die Erfindung wird nun unter Bezugnahme auf die Zeichnung näher erläutert. In der Zeichnung zeigen:
- Fig.1: eine schematische Perspektivansicht einer Abdeckung für ein Gassack-Rückhaltesystem in Fahrzeugen;
- Fig. 2: eine Schnittansicht durch eine Deckelplatte, an der eine Plakette befestigt ist;
- Fig. 3: eine analoge Schnittansicht bei einer abgewandelten Ausführungsform; und
- Fig. 4: eine schematische Darstellung der Herstellung und Befestigung einer Plakette an der Deckelplatte der Abdeckung.

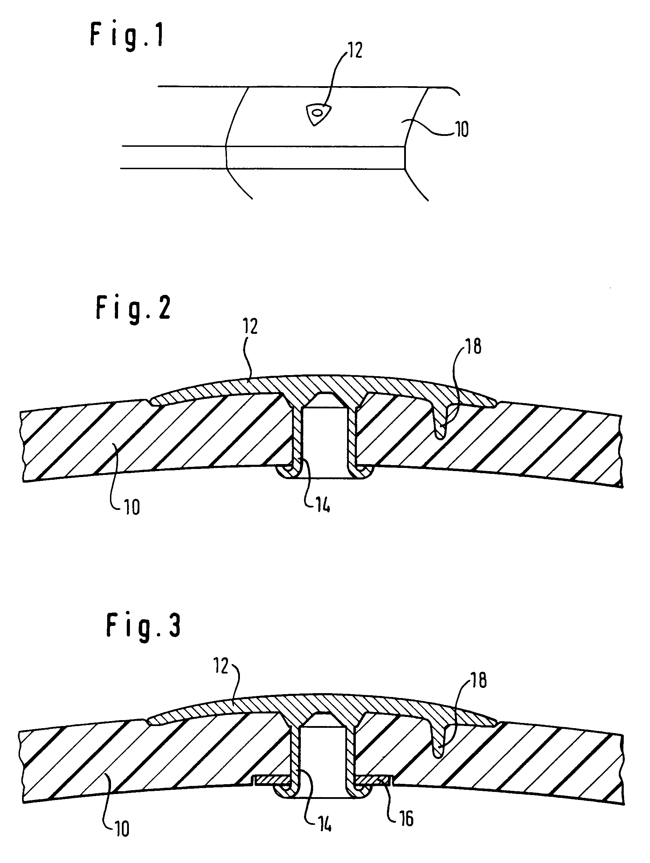

Fig. 1 zeigt beispielshalber eine Abdeckung mit einer Deckelplatte 10 bei einem Gassack-Rückhaltesystem für die Beifahrerseite. Auf der dem Insassen zugewandten Vorderseite der Deckelplatte 10 ist eine Plakette 12 befestigt, die mit einem Emblem oder Logo eines Fahrzeugherstellers versehen ist.

Die Plakette 12 ist aus einem Metallrohling durch Fließpressen hergestellt und weist auf ihrer der Deckelplatte 10 zugewandten Rückseite einen angeformten Hohlniet 14 auf, der eine Öffnung in der Deckelplatte 10 durchdringt. Der freie Endabschnitt des Hohlniets 14 ist auf der Rückseite der Deckelplatte 10 umgebördelt. Der umgebördelte Endabschnitt des Hohlniets 14 ist von konvexer Form und gegen die Rückseite der Deckelplatte 10 gerichtet, so daß die Kanten am Rand des Endabschnitts an der Rückseite der Deckelplatte 10 in Anlage sind und mit einem sich entfaltenden Gassack nicht in Berührung kommen können.

Bei der in Fig. 3 gezeigten Ausführungsvariante ist zwischen dem umgebördelten Endabschnitt des Hohlniets 14 und der Rückseite der Deckelplatte 10 eine Ringscheibe 16 eingefügt. Durch diese Ringscheibe 16 wird die Haltekraft der Befestigung weiter gesteigert.

Bei beiden Ausführungen ist die Plakette 12 ferner auf ihrer der Deckelplatte 10 Zugewandten Rückseite mit einem angeformten Zapfen 18 versehen, der in eine entsprechende Ausrichtöffnung an der Vorderseite der Deckelplatte eindringt. Mittels dieses Zapfens 18 wird die korrekte Ausrichtung des Emblems auf der Vorderseite der Plakette 12 erzwungen.

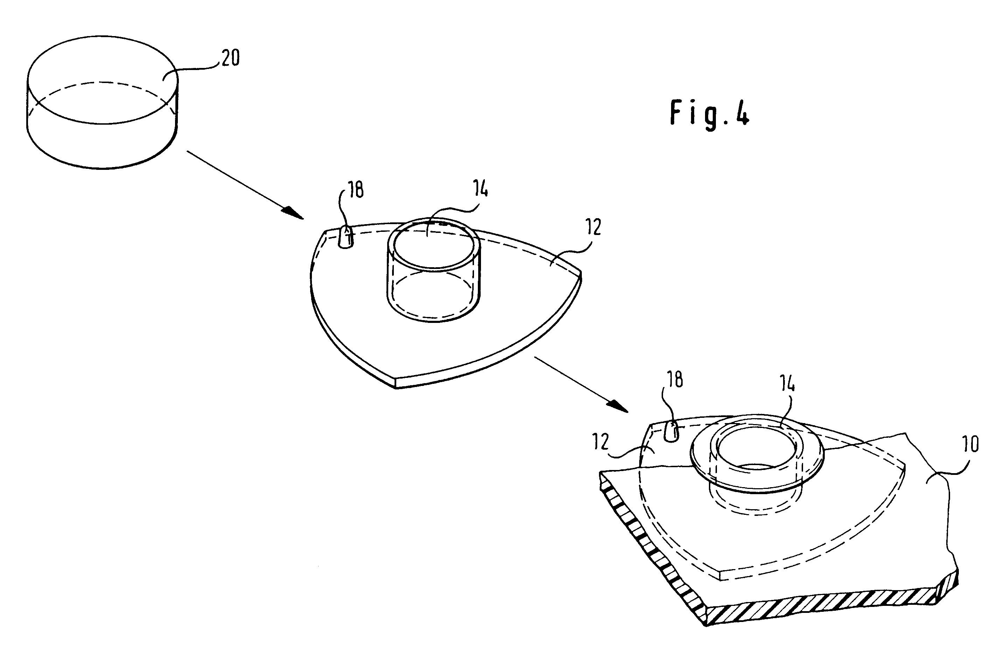

In Fig. 4 ist zunächst ein rundscheibenförmiger Rohling 20 aus Metall gezeigt. Aus diesem Rohling 20 wird die Plakette 12 durch Fließpressen hergestellt, wobei der Hohlniet 14 und der Zapfen 18 auf der Rückseite der Plakette 12 angeformt werden. Zugleich wird die Vorderseite der Plakette 12 in der gewünschten Weise geprägt, um ein Emblem oder dergleichen auszubilden.

Auf die mit einem durchgehenden Loch für den Hohlniet 14 sowie mit einer Ausrichtöffnung für den Zapfen 18 versehene Deckelplatte 10 wird dann die Plakette 12 aufgesetzt, und der auf der Rückseite der Deckelplatte 10 herausragende Endabschnitt des Hohlniets 14 wird mittels eines Stempels umgestülpt und umgebördelt. Bei Bedarf wird zuvor eine Ringscheibe auf den freien Endabschnitt des Hohlniets 14 geschoben, entsprechend der in Fig. 3 gezeigten Variante.

Je nach Größe und Form der Plakette werden auf ihrer Rückseite mehrere Hohlniete wie der Hohlniet 14 angeformt. Wenn die Befestigung mittels mehrerer Kohlnieten erfolgt, kann der Zapfen 18 entfallen.

## Patentansprüche

1. Abdeckung für ein Gassack-Rückhaltesystem in Fahrzeugen, mit einer Deckelplatte (10), an der eine mit einem Emblem versehene Plakette (12) befestigt ist, dadurch gekennzeichnet, daß die Plakette (12) auf ihrer der Deckelplatte (10) zugewandten Seite wenigstens einen angeformten Hohlniet (14) aufweist, der die Deckelplatte (10) durchdringt und dessen freier Endabschnitt auf der Rückseite der Deckelplatte (10) umgebördelt ist.

2. Abdeckung nach Anspruch 1, dadurch gekennzeichnet, daß der umgebördelte Endabschnitt des Hohlniets (14) konvex gewölbt und gegen die Rückseite der Deckelplatte (10) gerichtet ist.

3. Abdeckung nach Anspruch 1 oder 2, dadurch gekennzeichnet, daß zwischen dem umgebördelten Endabschnitt des Hohlniets (14) und der Rückseite der Deckelplatte (10) eine Ringscheibe (16) eingefügt ist.

4. Abdeckung nach einem der vorstehenden Ansprüche, dadurch gekennzeichnet, daß die Plakette (12) auf ihrer der Deckelplatte (10) zugewandten Seite ferner wenigstens einen angeformten Zapfen (18) aufweist, der in eine Ausrichtöffnung der Deckelplatte (10) eindringt.

## Claims

1. A cover for a gas bag restraining system in a vehicle comprising a cover plate (10), on which a badge (12) bearing an emblem is fixed, characterized in that the badge (12) on its side facing the cover plate (10) has at least one tubular rivet (14) formed thereon, which extends through the cover plate (10) and whose free end portion is rolled over at the rear side of the cover plate (10).

2. The cover as claimed in claim 1, characterized in that the rolled over end portion of the tubular rivet (14) is curved convexly and is directed toward the rear side of the cover plate (10).

3. The cover as claimed in claim 1 or in claim 2, characterized by an annular disk (16) inserted between the rolled over end portion of the tubular rivet (14) and the rear side of the cover plate (10).

4. The cover as claimed in any one of the preceding claims, characterized in that the badge (12) on its side facing the cover plate (10) furthermore possesses at least one pin (18) formed thereon, which is engaged into an alignment hole in the cover plate (10).

## Revendications

1. Couvercle pour un système de retenue des passagers dans des véhicules au moyen d'un sac gonflable, comportant une plaque de recouvrement (10), sur laquelle est fixée une plaquette (12) pourvue d'un emblème, caractérisé en ce que la plaquette (12) présente, sur sa face tournée vers la plaque de recouvrement (10), au moins un rivet tubulaire (14) formé d'une seule pièce avec la plaquette, qui passe à travers la plaque de recouvrement (10) et dont la section terminale libre est rabattue sur la face arrière de la plaque de recouvrement (10).

2. Couvercle selon la revendication 1, caractérisé en ce que la section terminale rabattue du rivet tubulaire (14) est bombée de façon convexe et est tournée vers la face arrière de la plaque de recouvrement (10).

3. Couvercle selon la revendication 1 ou 2, caractérisé en ce qu'entre la section terminale rabattue du rivet tubulaire (14) et la face arrière de la plaque de recouvrement (10) est insérée une rondelle annulaire (16).

4. Couvercle selon l'une des revendications précédentes, caractérisé en ce que la plaquette (12) présente en outre, sur sa face tournée vers la plaque de recouvrement (10), au moins un téton (18), formé d'une seule pièce avec la plaquette, téton qui pénètre dans une ouverture de positionnement de la plaque de recouvrement (10).
